# EUROPEAN PATENT APPLICATION

(11) **EP 4 757 076 A1**
(43) Date of publication of application: **10.06.2026**
(21) Application number: 25221991.0
(22) Date of filing: 09.12.2025
(51) Int. Cl.: H01R 4/24, H01R 4/2406, H01T 4/06, H02H 1/04, H02H 9/04

(54) **SURGE PROTECTION DEVICE**

(30) Priority: 09.12.2024 GB 202417980
(71) Applicant: Tofco CPP Limited, Ponteland Northumberland NE20 9SD (GB)
(72) Inventor: TOFT, Noel, Ponteland, NE20 9SD (GB); PUTTOCK, James, Ponteland, NE20 9SD (GB)
(74) Representative: Murgitroyd & Company

(57) **Abstract**

There is described a surge protection device configured to be fitted to a plurality of electrical wires, the device comprising: a body comprising: surge protection circuitry configured to conduct a voltage to earth during a surge condition; and a plurality of accommodating regions, each accommodating region being configured to receive an electrical wire; wherein each accommodating region comprises a protruding electrical terminal arranged in electrical communication with the surge protection circuity; and a lid configured to extend over the plurality of accommodating regions; wherein the lid is configured to be coupled to the body to clamp any wires received in the accommodating regions against the protruding electrical terminals in the accommodating regions such that, for each accommodating region, a conductor of any wire received in the accommodating region is electrically connected to the surge protection circuitry by the respective protruding electrical terminal.

## Description

### Field of the Invention

The present invention relates to surge protection devices for electrical circuits.

### Background of the Invention

Surge protection devices (SPDs) operate to protect electrical devices, appliances and systems connected to alternating current electricity supplies from voltage spikes or surges. The surges which SPDs mitigate are typically short in duration, e.g., tens of microseconds. Such surges may be the result of atmospheric electrical phenomena such as lightning strikes.

Surge protection devices are also known as transient voltage surge suppressors (TVSSs). These devices may be installed in distribution panels to protect electrical systems, e.g., communications infrastructure, industrial electronic systems. SPDs may also be installed directly upstream of individual sensitive electronic devices or appliances to provide specific surge mitigation.

SPDs act to limit a voltage of a circuit to be protected (or subject circuit) to a predetermined suitable threshold. SPDs may conduct a voltage surge to earth or absorb the energy of a surge to mitigate propagation of the surge through the subject circuit and protect the devices of that circuit.

A conventional SPD may comprise a rail mountable device configured to be installed in a cabinet or electrical control panel. For example, a typical SPD may comprise a Deutsche Institut fur Normung (DIN) rail mountable enclosure, surge protection circuitry and terminals configured to be connected to the subject circuit and electrical earth by wires. Such an SPD may be connected in series with the subject circuit.

### Summary of the Invention

At its most general, the present invention provides a surge protection device for protecting electrical circuitry and equipment from transient spikes in a supply voltage. The device of the present invention is configured to be fitted to and in electrical communication with at least two electrical wires of a subject circuit, e.g., wires supplying electricity to a premises (e.g., domestic residence or commercial building) or to an item of infrastructure (e.g., a street lamp). The device is configured to be retrofittable to electrical wires of an existing circuit without disassembly of the circuit. In this way, the device may be a retrofit surge protection device.

According to a first aspect of the invention, there is provided a surge protection device configured to be fitted to a plurality of electrical wires, the device comprising: a body comprising: surge protection circuitry configured to conduct a voltage to earth during a surge condition; and a plurality of accommodating regions, each accommodating region being configured to receive an electrical wire; wherein each accommodating region comprises a protruding electrical terminal arranged in electrical communication with the surge protection circuity; and a lid configured to extend over the plurality of accommodating regions; wherein the lid is configured to be coupled to the body to clamp any wires received in the accommodating regions against the protruding electrical terminals in the accommodating regions such that, for each accommodating region, a conductor of any wire received in the accommodating region is electrically connected to the surge protection circuitry by the respective protruding electrical terminal.

The body may comprise any suitable surge protection circuitry configured to conduct a voltage to earth during a surge condition. A surge condition may include a condition in which a potential difference between at least two of the plurality of electrical wires with which the surge protection circuitry is in electrical communication exceeds a predetermined threshold.

Depending on the configuration of the surge protection circuitry, the device may be used as a primary, or T1, surge protection device configured to be installed at a service entrance or main distribution panel, a secondary, or T2, surge protection device configured to be installed downstream of a T1 device at a secondary distribution panel or subpanel, or a tertiary, or T3, surge protection device configured to be installed downstream of a T2 device and directly upstream of sensitive electronic devices or appliances. Some configurations of the device may be used as both primary and secondary, T1 and T2, protection simultaneously or secondary and tertiary, T2 and T3, protection simultaneously.

The body may comprise any suitable number and type of accommodating regions configured to receive an electrical wire. The accommodating regions may be areas of a body against which, in use, the lid of the device is configured to clamp the electrical wires. The accommodating regions may comprise visual and/or tactile demarcation from other areas of the body. For example, an accommodating region may be a different colour from other areas of the body and/or may comprise a surface texture configured to distinguish it from other areas of the body. In this way, an accommodating region may be easy to identify and the device may be simple to install.

Additionally or alternatively, each accommodating region may comprise a formation configured to receive the electrical wires. For example, an accommodating region may comprise a channel, groove, indentation or depression in a surface of the body in which an electrical wire is configured to be received. Any other suitable type of formation may be used. In this way, an accommodating region may assist in retaining an electrical wire in position during installation of the device.

Each accommodating region of the device may be substantially identical or may be substantially different. That is, any combination of accommodating region features and characteristics may be used in a device of the present invention.

The protruding electrical terminal of each accommodating region is arranged in electrical communication with the surge protection circuity. As such, the protruding electrical terminals comprise electrically conductive materials such as metal, e.g., copper or aluminium. A portion of each protruding electrical terminal may be provided with electrically non-conducting insulation.

During installation, the electrical wires of the circuit to which the device is to be connected may be arranged with respect to the body of the surge protection device such that the electrical wires are received in the accommodating regions of the body. The lid may then be arranged over the electrical wires received in the accommodating regions and coupled securely to the body to clamp the electrical wires against the protruding electrical terminals in the accommodating regions of the body. In the alternative, the lid of the device may be arranged with respect to the electrical wires first, then the body may be coupled to the lid to clamp the electrical wires against the protruding electrical terminals in the accommodating regions of the body. In either way, the device is attached to the electrical wires by installation of the lid on the body.

Installation of the device is simple and, when compared with existing surge protection solutions, presents a low safety risk to the installer. As such, the device may be fitted quickly and cheaply by a trained technician. Further, the simplicity of the device lends itself to being suitable for fitment by an operator having minimal electrical training, such as an apprentice or trainee, when instructed by a trained operator.

The device of the present invention operates in parallel with the incoming supply, i.e., the device requires only a branching connection, rather than a series connection, from each of the plurality of electrical wires. As such, the device is configured to be fitted to electrical wires of an operational circuit, that is, to electrical wires already arranged in a circuit, without needing to disconnect the wires or modify the circuit. In this way, the device is simply, conveniently and inexpensively retrofittable to existing circuits and may therefore be known as a retrofit surge protection device.

In some embodiments, each protruding electrical terminal comprises a spike portion configured to pierce insulation of any wire received in the respective accommodating region. In this way, each protruding electrical terminal may penetrate the insulation pierced by the spike portion to reach and make electrical contact with the conductor of the wire.

In some embodiments, the spike portion may be formed integrally with the protruding electrical terminal. For example, the spike portion may be a sharp point or tip of the protruding electrical terminal. In those embodiments, the spike portion may be in electrical communication with the surge protection circuitry and may be formed of an electrically conductive material, e.g., metal such as copper or aluminium. The protruding electrical terminal may be configured to penetrate the insulation in any suitable manner to enable the terminal to make electrical contact with conductive material disposed inside the insulation. For example, the protruding electrical terminal may be configured to pierce, slice or cut insulation, for example, by comprising a blade.

By piercing the insulation of the wire, the spike portion permits the protruding electrical terminal to make electrical contact with the conductor of the wire without requiring the conductor of the wire to be exposed, e.g., stripped, beforehand. In this way, installation of the device is accelerated by removal of steps relating to exposing the conductor of the wire. In addition, a risk of electrocution posed to an operator installing the device is reduced by not requiring the operator to expose the conductor of the wire. Therefore, the device is quick, simple, inexpensive and low risk to install.

In some embodiments, the device is configured to be retrofitted to a plurality of live electrical wires. In other words, the device may even be fitted to electrical wires while a circuit is operating. In such embodiments, the device may be a retrofit surge protection device. So, the device may be retrofittable to existing circuits without interruption, or downtime, and may therefore be convenient, quick and inexpensive to install.

In some embodiments, the plurality of electrical wires comprises a live wire and a neutral wire of an alternating current mains supply. In this way, the device may be suitable for surge protection of single phase alternating current circuits. The device may also be suitable for surge protection for other types of circuit. For example, the device may be suitable for surge protection of each phase of a three phase alternating current circuit. In this scenario, one device according to the claimed invention may protect all three phases of such a circuit by comprising four accommodating regions each configured to receive one wire of a group comprising three live phase wires and one common neutral wire. Accordingly, in some embodiments, the plurality of electrical wires comprises three live wires and a neutral wire of a three phase alternating current supply.

In some embodiments, each accommodating region comprises a plurality of protruding electrical terminals arranged in electrical communication with the surge protection circuity. By providing a plurality of protruding electrical terminals arranged in each accommodating region, an electrical connection made between the conductor of the wire and the surge protection circuitry by the protruding electrical terminals may be more reliable. For example, when two or more protruding electrical terminals are provided, there is at least one redundant protruding electrical terminal.

In some embodiments, each protruding electrical terminal is arranged to protrude into the respective accommodating region in a direction substantially parallel to a direction of a clamping force applied by the lid. So, when the lid is coupled to the body, the lid may clamp the wires in a direction substantially parallel to axes of the protruding electrical terminals. In this way, the clamping may reliably and securely cause the connection of the conductor of the wire with the surge protection device.

In the case where each protruding electrical terminal comprises a spike portion, by extending in a direction substantially parallel to a clamping direction, each spike portion may reliably pierce the insulation of the wire.

In some embodiments, the lid comprises a plurality of accommodating regions; and, when the lid is coupled to the body, each of the plurality of accommodating regions of the lid is substantially aligned with a respective one of the plurality of accommodating regions of the body. By providing accommodating regions in the lid that match and align with the accommodating regions of the body, the installation of the device may be further simplified. For example, a correct orientation of the lid on the device may be obvious to an operator installing the device as it may be simple to match up the accommodating regions.

Further, in some embodiments, each accommodating region of the lid may comprise a formation configured to receive the electrical wires. The formations may be similar to those described above with respect to the accommodating regions of the body. When the accommodating regions of the lid comprise a formation such as a channel, the lid may be configured to accommodate a portion of the wire in use. In this way, the wire may be securely located and accommodated by the lid and body together. Further, the lid and body may, when coupled together, be closely adjacent so that a gap between the lid and body is small. In this way, a risk of exposure to live wires posed to the operator installing the device is reduced.

In some embodiments, the accommodating regions of the body and lid may be substantially the same or substantially similar. For example, in some embodiments the body and lid may both comprise channels configured to receive electrical wires. In other embodiments, the accommodating regions of the body and lid may be substantially different. For example, while the accommodating regions of the lid may comprise channels, the accommodating regions of the body may comprise a visual indicator of locations of the accommodating regions only.

In some embodiments, each accommodating region of the plurality of accommodating regions of the lid comprises a securing element configured to secure any wire received in the respective accommodating region. In this way, the wires may be secured to the lid before the lid is clamped to the body, leading to a secure device and accurately located wires. Each accommodating region of the lid may, for example, comprise a clip or spike configured to retain a wire in the accommodating region.

In some embodiments, the lid is configured to be coupled to the body by a fastening element. In some embodiments, the lid is configured to be fastened to the body by a plurality of fastening elements. The fastening element may comprise a screw or bolt. The fastening element ensures a secure coupling of the lid to the body. The fastening element may also be configured to provide a releasable coupling, that is, a coupling that may be released to decouple the lid and the body without destruction of any parts of the device.

In some embodiments, the fastening element comprises a fastener configured to couple the body to the lid at a point disposed between two adjacent accommodating regions of the plurality of accommodating regions of the body. In this way, a clamping force may be distributed between two adjacent accommodating regions to provide a substantially even clamping force over wires received in both accommodating regions to provide reliable electrical connections between conductors of the wires and the surge protection circuitry. Where more than two accommodating regions are provided, fastening elements may be provided to couple the body to the lid between each adjacent accommodating region. For example, where three accommodating regions are provided, two fastening elements may be interspersed with the accommodating regions to provide a substantially even clamping force over wires received in all three accommodating regions.

In some embodiments, the fastening element comprises a plurality of fasteners. Each fasteners of the plurality of fasteners may be substantially identical, e.g., a set of substantially identical screws may be provided to coupled the lid to the body. In other embodiments, the plurality of fasteners may comprise at least two different fasteners, for example, a clip and a screw to provide a poka-yoke fastening arrangement.

In some embodiments, the plurality of fasteners are configured to couple the body to the lid at points disposed proximate a periphery of the body. In this way, outer edges of the lid may be securely coupled to the body.

In some embodiments, the surge protection circuitry comprises a conduction device configured to provide an open circuit in normal use and configured to conduct to earth during a surge condition. The device may be used to protect any suitable subject circuit and may comprise any suitable surge protection circuitry. The surge protection circuitry may comprise any suitable conduction device. The conduction device may act to mitigate a surge by conducting to earth during a surge condition.

In some embodiments, the conduction device is configured to conduct to earth when a voltage measured between a protective earth and any one the plurality of protruding electrical terminals exceeds a predetermined threshold. For example, the conduction device may be selected or tuned to provide conduction at a specific voltage according to the use case of the device. In this way, the conduction device may conduct to mitigate a surge at a suitable voltage. That voltage may, for example, be a voltage expected to cause damage to downstream electronics or appliances, or present danger to users of the downstream electronics or appliances.

In some embodiments, the conduction device is a gas discharge tube. As such, in those embodiments, the predetermined threshold may be a voltage at which gas in the gas discharge tube ionises so that the gas discharge tube becomes conductive to conduct the surge voltage to earth.

In some embodiments, the surge protection circuitry comprises an indicator configured to indicate that the surge protection device is operational. In this way, a status of the surge protection device may be easily assessed, even at a glance. The indicator may be connected between protruding electrical terminals of different accommodating regions. The indicator may be an illuminated indicator configured to be illuminated when the device is operational and unilluminated when the device is not operational. The indicator may be a light emitting diode (LED) indicator.

In some embodiments, the surge protection circuitry comprises a thermal fuse arranged in series with the indicator and configured to interrupt a power supply to the indicator when a predetermined thermal threshold is exceeded. The thermal fuse may be configured to blow (or fail) when it experiences a thermal condition that exceeds the predetermined thermal threshold. The predetermined thermal threshold may comprise a temperature and a time component. The predetermined thermal threshold may comprise a first threshold defined by a first temperature and a first duration and a second threshold defined by a second temperature and a second duration. For example, where the first temperature is higher than the second temperature, the first duration may be shorter than the second duration.

Before the thermal fuse fails, it may act as a closed circuit. After the thermal fuse fails, it may acts as an open circuit. In this way, failure of the fuse may interrupt a power supply to the indicator to deactivate the indicator (e.g., unilluminate an LED) when the predetermined thermal threshold is exceeded.

In some embodiments, the thermal fuse is configured to be thermally connected to a component electrically connected between the protruding electrical terminal of a first accommodating region of the plurality of accommodating regions of the body and the protruding electrical terminal of a second accommodating region of the plurality of accommodating regions of the body. In some embodiments, the component electrically connected between the protruding electrical terminal of a first accommodating region of the plurality of accommodating regions of the body and the protruding electrical terminal of a second accommodating region of the plurality of accommodating regions of the body is a varistor. The role of the varistor is further discussed below.

By being thermally connected to the varistor, the thermal fuse may monitor the thermal performance of the varistor and detect an end of life condition, characterised by a degradation in thermal performance (i.e., an elevated temperature of the varistor). By being arranged in series with the indicator, the thermal fuse may facilitate the communication of the end of life condition of the varistor to a user/operator of the device by interrupting the power supply to the indicator when the fuse fails, thereby deactivating the indicator.

In some embodiments, the surge protection circuitry comprises a varistor connected between the protruding electrical terminal of a first accommodating region of the plurality of accommodating regions of the body and the protruding electrical terminal of a second accommodating region of the plurality of accommodating regions of the body; wherein, in response to a first voltage across the varistor, the varistor is configured to exhibit a first resistance, and in response to a second voltage across the varistor, the varistor is configured to exhibit a second resistance. In this way, the surge protection circuitry may operate in one way during non-surge conditions, i.e., normal operation, and may operate differently during a surge.

In some embodiments, when the first voltage is higher than the second voltage, the first resistance is lower than the second resistance. When the resistance of the varistor is high, the varistor may be a substantially open circuit. When the resistance of the varistor is low, the varistor may be a substantially closed circuit.

Accordingly, when a very high voltage is present at the protruding electrical terminal of the first accommodating region (i.e., during a surge) such that a potential difference between the protruding electrical terminal of the first accommodating region and the protruding electrical terminal of the second accommodating region is very high, the resistance of the varistor may be very low such that the protruding electrical terminals of the first and second accommodating region may be connected by a substantially closed circuit. In this way, during a surge, the conduction device may act to mitigate a surge present in either a wire received in the first accommodating region or a wire received in the second accommodating region. As such, only one conduction device is required.

In some embodiments, the varistor is arranged in parallel with the indicator. Ratings, i.e., electrical characteristics such as breakdown voltage, of the varistor and conduction device may be specified to adapt the surge protection device for operation as a T1, T1/2, T2 or T2/3 surge protection device.

In some embodiments, the surge protection device may comprise a common mode surge protection device. The surge protection device may be configured to limit overvoltage between a phase line and a neutral line of an alternating current circuit. The surge protection device may be configured to mitigate a voltage surge by conducting the surge voltage to earth.

In normal use (i.e., non-surge condition), the surge protection circuitry does not conduct between any protruding electrical terminal and earth. In such a condition, for embodiments comprising a varistor and a conduction device, the resistance of the varistor is high and the conduction device is non-conducting. During a surge, the surge protection circuitry conducts between protruding electrical terminals and earth. The resistance of the varistor is low due to high voltage across the varistor during the surge and the conduction device conducts to earth.

In embodiments comprising an indicator, a thermal fuse may be arranged in series with the indicator. The thermal fuse may be thermally connected to the varistor. In some embodiments, the thermal fuse may be thermally connected to another component of the electrical circuit such as a resistor, instead of or in addition to the varistor.

In normal use, the thermal fuse may be configured to act as a closed circuit connection, e.g., as a simple wire. When the thermal fuse experiences a thermal condition (e.g., defined by a temperature and/or duration) above a predetermined threshold, the fuse may be configured to blow (or open, or fail) such that the thermal fuse acts as an open circuit. When the thermal fuse blows, the series connected indicator is disconnected from the circuit and the indicator loses power and deactivates. Where the indicator is an LED indicator, the LED is illuminated in normal use and unilluminated after the thermal fuse blows. In this way, an end-of-life condition of the circuit may be detected and communicated to a user.

### Brief Description of the Drawings

Embodiments of the present invention will now be described by way of example only and with reference to the accompanying drawings, in which:
Figure 1 depicts an exploded isometric view of a surge protection device according to an embodiment of the invention;
Figure 2 depicts an isometric view of the surge protection device of Fig. 1;
Figure 3 depicts the body of the surge protection device of Fig. 1;
Figure 4 depicts a circuit diagram of surge protection circuitry of the surge protection device of Fig. 1;
Figure 5 depicts a circuit diagram of surge protection circuitry of a surge protection device according to a further embodiment of the invention; and
Figure 6 depicts a circuit diagram of surge protection circuitry of a surge protection device according to a further embodiment of the invention.

### Detailed Description

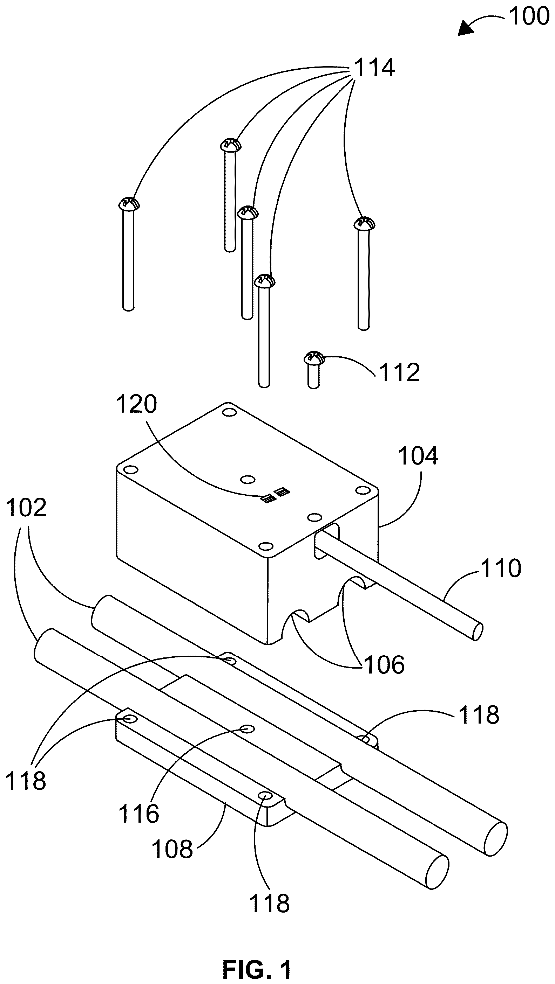

With reference to Figure 1, there is illustrated an exploded isometric view of a surge protection device 100 according to an embodiment of the invention. The surge protection device 100 is configured to be fitted to a plurality of electrical wires 102. At the time of installation, the wires 102 may be live. The device 100 comprises a body 104. The body 104 comprises surge protection circuitry (not shown) configured to conduct a voltage to earth during a surge condition. The body 104 further comprises a plurality of accommodating regions 106. Each accommodating region 106 being configured to receive an electrical wire 102. Each accommodating region 106 comprises a protruding electrical terminal (not shown) arranged in electrical communication with the surge protection circuity. The device 100 further comprises a lid 108. The lid 108 is configured to extend over the plurality of accommodating regions 106. The lid 108 is configured to be coupled to the body 104 to clamp any wires 102 received in the accommodating regions 106 against the protruding electrical terminals in the accommodating regions 106. In this way, for each accommodating region 106, a conductor of any wire 102 received in the accommodating region 106 is electrically connected to the surge protection circuitry by the respective protruding electrical terminal.

The surge protection circuitry is located inside the body 104 and so is not visible in Fig. 1. The surge protection circuity is connected to an earth via protective earth wire 110. In Fig. 1, the protective earth wire 110 has a smaller cross sectional area than the wires to which the device 100 is fitted. The protective earth wire 110 is connected to the surge protection circuitry within the body 104 via a lug (not shown) which is secured by screw 112.

The accommodating regions of the body 104 in the embodiment of Fig. 1 take the form of channels configured to receive the wires 102. In the embodiment of Fig. 1, the lid 108 also comprises a plurality of accommodating regions. These accommodating regions also take the form of channels. In Fig. 1, the wires 102 are shown received in the channels of the lid 108 before the lid 108 is coupled to the body 104.

When the lid 108 is coupled to the body 104, each one of the accommodating regions of the lid 108 is substantially aligned with a respective one of the accommodating regions of the body 104. At this point, the wires 102 may be effectively sandwiched between the lid 108 and the body 104 and securely located in the accommodating regions 106 such that the protruding electrical terminals may make reliable electrical contact with conductors of the electrical wires 102.

Screws 114 are configured to couple the lid 108 to the body 104. One of the screws 114 is configured to couple the lid 108 to the body 104 at a point between the two accommodating regions 106 of the body 104 and lid 108. That screw is configured to engage the lid 108 at the substantially central aperture 116. The aperture 116 may be a tapped hole or may comprise a threaded insert configured to engage the screw to secure the lid 108 to body 104.

The other screws 114 are configured to couple the body 104 to the lid 108 at points disposed proximate a periphery of the body 104. Those screws are configured to engage the lid 108 at the peripheral apertures 118. The peripheral apertures 118 may be similar to the substantially central aperture 116 in comprising a tapped hole or threaded insert.

In alternative embodiments, fasteners may pass through the lid and engage with holes in the body. In some embodiments, both types of fasteners may be provided.

The device 100 of Fig. 1 includes an LED indicator 120 configured to be illuminated when the device 100 is functioning correctly and not be illuminated when the device 100 is not functioning correctly, e.g., at end of life.

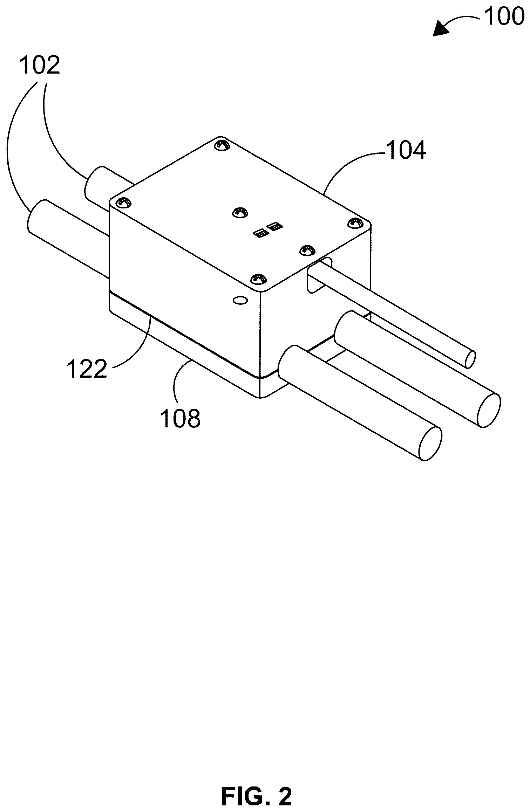

With reference to Figure 2, there is illustrated an isometric view of the surge protection device 100 of Fig. 1. In Fig. 2, the device 100 is shown assembled.

Because both the body 104 and lid 108 of the device 100 of Figs. 1 and 2 comprise channel-type accommodating regions, a gap 122 remaining between the body 104 and lid 108 once assembled to the wires 102 is very small. As such, the device is compact and securely attached to the wires 102.

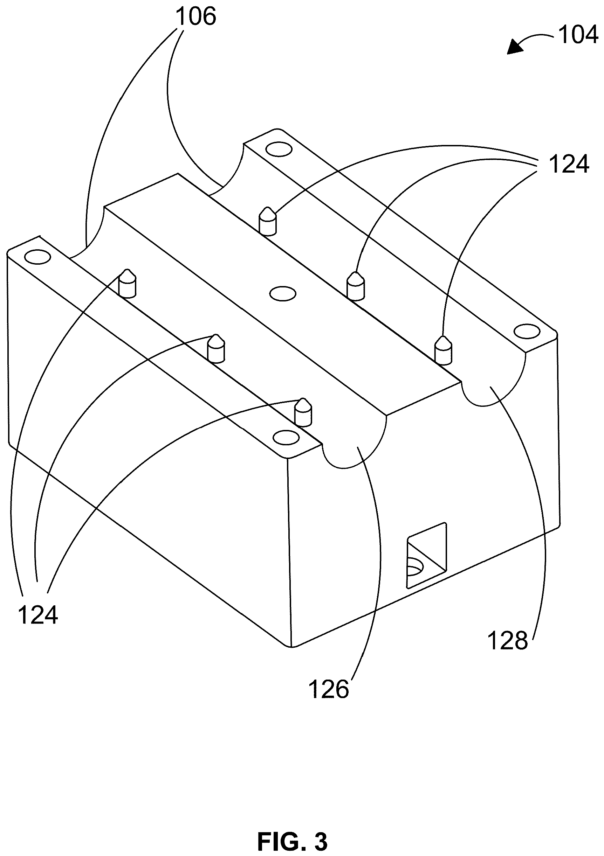

With reference to Figure 3, there is illustrated the body 104 of the surge protection device 100 of Fig. 1. In Fig. 3, an underside of the body 104 is shown so that the accommodating regions 106 are clearly visible.

Each accommodating region 106 of the body 104 comprises a protruding electrical terminal 124. Each protruding electrical terminal 124 is arranged in electrical communication with the surge protection circuity within the body 104. In the embodiment of Fig. 3, each accommodating region 106 comprises three protruding electrical terminals 124. In other embodiments more or fewer protruding electrical terminals 124 may be provided.

The protruding electrical terminals 124 of a first accommodating region 126 are all connected to a first common terminal of the surge protection circuit. While the protruding electrical terminals 124 of a second accommodating region 128 are all connected to a second, different, common terminal of the surge protection circuit.

In Fig. 3, each protruding electrical terminal 124 comprises a spike portion configured to pierce insulation of a wire 102 received in the respective accommodating region 106. In this case, each spike portion is integral to the respective protruding electrical terminal 124 and forms a pointed tip of the respective protruding electrical terminal 124.

Each protruding electrical terminal 124 of Fig. 3 is arranged to protrude into the respective accommodating region 106 in a direction substantially parallel to a direction of a clamping force applied by the lid. In the embodiment of Fig. 3, each protruding electrical terminal 124 protrudes substantially radially from a centre of the respective channel-type accommodating region 106. In other embodiments, it is envisaged that the protruding electrical terminals may protrude in a different direction, and/or may not all protrude in a common direction.

With reference to Figs. 1-3, during installation, when the lid 108 is coupled to the body 104, the wires 102 are clamped against the protruding electrical terminals 124 in the accommodating regions 106 of the body 104. In this way, for each accommodating region 106, a conductor of the wire 102 received in the accommodating region 106 is electrically connected to the surge protection circuitry by the respective protruding electrical terminal 124.

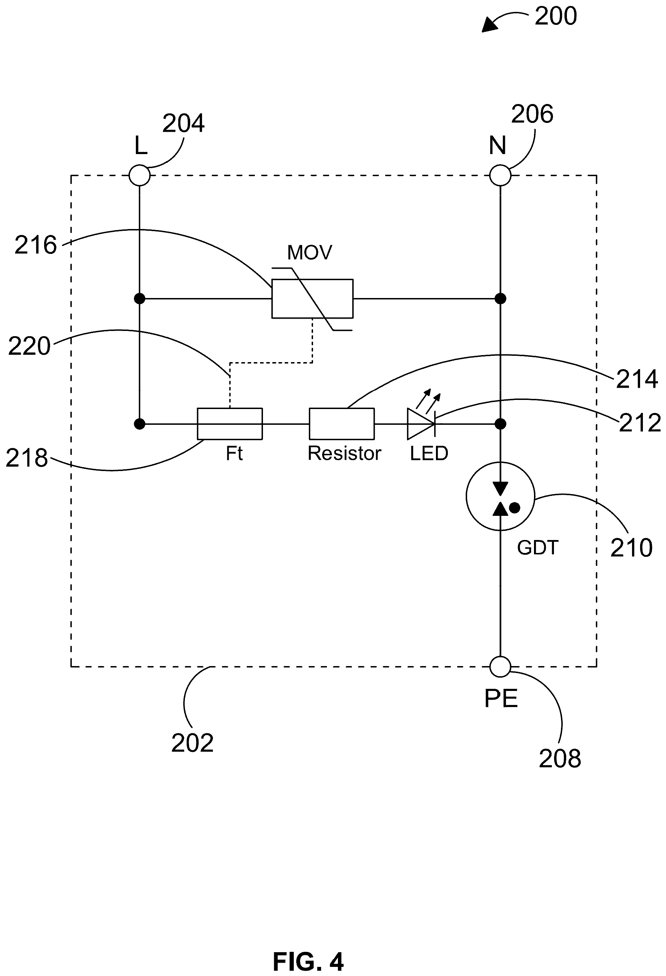

With reference to Figure 4, there is illustrated a circuit diagram 200 of surge protection circuitry 202 of the surge protection device 100 of Fig. 1.

In the circuit diagram 200 of Fig. 4, boundaries of the surge protection circuitry 202 are denoted by the dotted outline. The surge protection circuitry 202 is connected to the wires of the circuit being protected, i.e., the subject circuit, via protruding electrical terminals (e.g., protruding electrical terminals 124 in Fig. 3). In Fig. 4, the surge protection circuitry 202 is configured to be connected to a Live 204 and a Neutral 206 wire (or terminal) of a single phase alternating current subject circuit, e.g., a mains supply. The surge protection circuitry 202 is also connected to earth via a protective earth terminal 208. So, the surge protection circuitry 202 is operable to conduct a voltage from either of the Live 204 or Neutral 206 terminals to protective earth 208 during a surge condition.

In Fig. 4, the surge protection circuitry 202 comprises a conduction device 210. The conduction device 210 is in direct electrical communication with the Neutral 206 terminal and indirect electrical communication with the Live 204 terminal via a varistor 216, the operation of which is discussed below. During a non-surge condition, i.e., normal subject circuit operation, the conduction device 210 is open circuit, that is, non-conducting. In that condition, the surge protection circuitry 202 does not conduct voltage from the subject circuit to earth 208.

During a surge, a voltage between either of the Live 204 or Neutral 206 terminals and the earth 208 is elevated. When that voltage exceeds a pre-determined threshold, the conduction device 210 becomes closed circuit, that is, conducting. So, in that condition, the surge protection circuitry 202 conducts voltage from the subject circuit to earth 208 to mitigate a voltage surge.

The conduction device 210 in the embodiment of Fig. 4 is a gas discharge tube. In the case of a gas discharge tube, the predetermined threshold voltage is a voltage at which the gas in the gas discharge tube ionises to allow conduction of electricity through the gas discharge tube to the earth 208. When the voltage between either of the Live 204 or Neutral 206 terminals and the earth 208 falls below the pre-determined threshold, the gas discharge tube may stop conducting (ions may recombine, de-ionising the gas) so that normal operation of the subject circuit is resumed.

The surge protection circuitry 202 of Fig. 4 comprises an indicator 212 configured to indicate that the surge protection device 200 is operational. In Fig. 4, the indicator 212 is an LED 212 connected between the Live 204 and Neutral 206 terminals of the subject circuit. The LED 212 is arranged in series with a resistor 214 which acts to reduce a power supplied to the LED 212 to a level suitable for the LED 212.

As shown in Fig. 4, the LED 212 may also be arranged in series with a thermal fuse 218. The thermal fuse 218 is in thermal communication with the varistor 216, as indicated by dotted line 220. In normal use, the thermal fuse acts as a closed circuit. In this way, while the surge protection circuitry 202 is operating normally, the indicator 212 is powered or activated, i.e., the LED 212 is illuminated. At an end-of-life of the circuit 202, determined by a thermal performance of the varistor 216, the thermal fuse 218 may blow (e.g., an internal component may melt) breaking a connection through the fuse 218 and causing the fuse 218 to act as an open circuit. In this way, at end-of-life of the device 100, the LED indicator 212 may be unilluminated such that an inoperable condition of the device 100 is communicated to a user or operator.

The varistor 216, or voltage-dependent resistor, of Fig. 4 is connected between the Live line 204 and the Neutral line 206. The varistor 216 is arranged in parallel with the series indicator 212 (LED), resistor 214 and thermal fuse 218. In response to a first voltage across the varistor 216, the varistor 216 is configured to have a first electrical resistance and, in response to a second voltage across the varistor 216, the varistor 216 is configured to have a second electrical resistance. In this way, the resistance of the varistor 216 varies with the voltage across the varistor 216. The resistance of the varistor 216 may increase as the voltage across the varistor 216 decreases, and vice versa. The resistance of the varistor may vary between a very high resistance, e.g., a substantially open circuit resistance, and a very low resistance, e.g., a substantially closed circuit resistance. In some cases, the resistance of the varistor 216 may be inversely proportional to the voltage across the varistor 216.

In a non-surge condition, i.e., normal subject circuit operation, the voltage across the varistor 216 may be low and the varistor 216 may have a correspondingly high resistance, e.g., a substantially open circuit resistance. In this way, when a surge is not present, the varistor inhibits conduction between the Live line 204 and the Neutral line 206 to enable the subject circuit to operate normally.

In a surge condition, the voltage across the varistor 216 may be high as one of the Live line 204 and the Neutral line 206 is experiencing a voltage surge. So, the varistor 216 may have a correspondingly low resistance, e.g., a substantially closed circuit resistance. In this way, during a surge condition, the Live line 204 and Neutral line 206 may have a substantially identical voltage. In addition, that voltage may be present also at the conduction device 210. As such, the conduction device 210 may operate to conduct a surge voltage to protective earth 208 regardless of whether the surge occurs on the Live line 204 or Neutral line 206.

When the surge ends, i.e., the voltage drops, the resistance of the varistor rises automatically (i.e., by virtue of the variable resistance nature of the varistor) to return the subject circuit to a normal operation condition. The varistor 216 may be a metal oxide varistor. Any suitable type of varistor may be used.

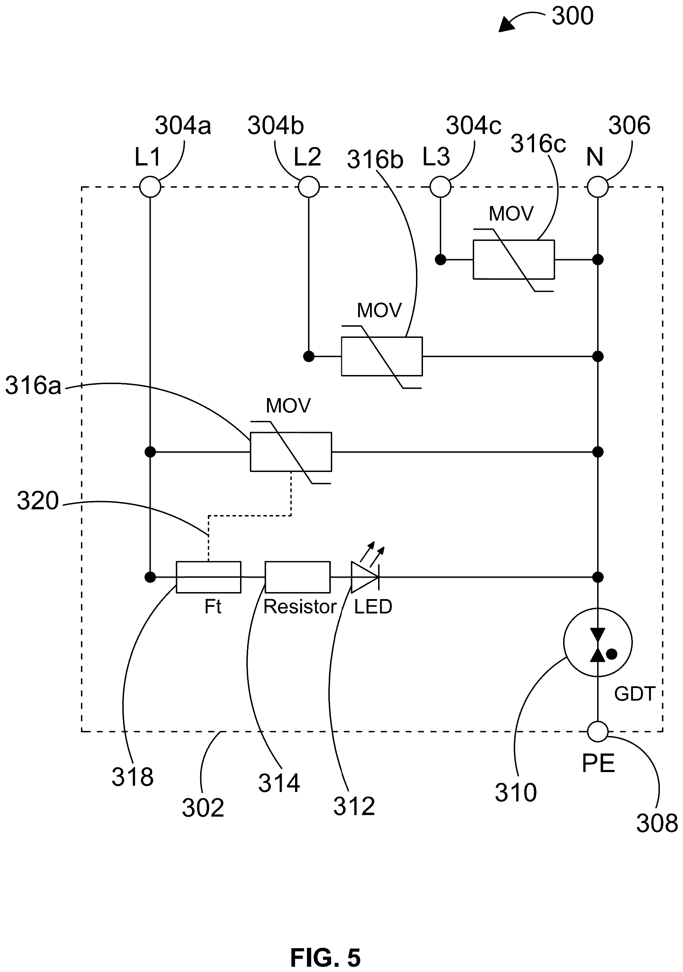

With reference to Figure 5 there is illustrated a circuit diagram 300 of surge protection circuitry 302 of a surge protection device according to a further embodiment of the invention.

In the circuit diagram 300 of Fig. 5, boundaries of the surge protection circuitry 302 are denoted by the dotted outline. The surge protection circuitry 302 is connected to the wires of the circuit being protected, i.e., the subject circuit, via protruding electrical terminals. In Fig. 5, the surge protection circuitry 302 is configured to be connected to three Live 304a, 304b, 304c and one Neutral 306 wires (or terminals) of a three phase alternating current subject circuit. The surge protection circuitry 302 is also connected to earth via a protective earth terminal 308. So, the surge protection circuitry 302 is operable to conduct a voltage from any of the Live 304a, 304b, 304c or Neutral 306 terminals to protective earth 308 during a surge condition.

The circuity 302 of Fig. 5 operates in a very similar way to the circuitry 202 of Fig. 4. In particular, the circuitry 302 of Fig. 5 comprises a single conduction device 310 which is connected directly to the Neutral 306 terminal of the device and indirectly, in each case via a respective varistor 316a, 316b, 316c, to the Live 304a, 304b, 304c terminals of the device. In addition, in parallel with the three varistors is provided an indicator 312, resistor 314 and thermal fuse 318 arranged in series with one another. The thermal fuse 318 in Fig. 5 is thermally connected to the varistor 316a arranged between the first Live 304a terminal and the Neutral 306 terminal, as indicated by dotted line 320. It is anticipated that the three varistors 304a, 304b, 304c may reach an end-of-life condition at the same time and therefore that a thermal connection between the thermal fuse 318 and any one of the varistors 316a, 316b, 316c is sufficient to enable the detection and communication of an end-of-life condition of the device to the user/operator via unillumination of the indicator 312 when the thermal fuse 318 blows.

In use, under normal (non-surge) conditions, the voltage across each varistor 316a, 316b, 316c is relatively low and the resistance of each varistor 316a, 316b, 316c is relatively high such that each varistor 316a, 316b, 316c acts as an open circuit. In this way, the subject circuit operates as normal, the indicator 312 is powered (i.e., the LED is illuminated) and the conduction device 310 is not experiencing a high voltage and therefore is non-conducting. When a surge is present at any of the Live 304a, 304b, 304c terminals, the voltage across the respective varistor 316a, 316b, 316c is high, causing the resistance of the respective varistor 316a, 316b, 316c to be low such that the respective varistor 316a, 316b, 316c acts as a closed circuit. In this way, the surge is transmitted to the conduction device 310. If the surge is present at the Neutral 306 terminal, the surge is directly transmitted to the conduction device 310 due to the internal connections of the circuitry 302 illustrated in Fig. 5. In either case, once the surge is transmitted to the conduction device 310, a gas discharge tube in Fig. 5, the conduction device 310 experiences a high potential difference across its terminals, exceeding the predetermined threshold, causing the conduction device 310 to begin conducting. In this way, the surge is conducted to the protective earth terminal 308 and the surge is not transmitted to downstream circuitry. Accordingly the device provides surge protection to a three phase alternating current circuit.

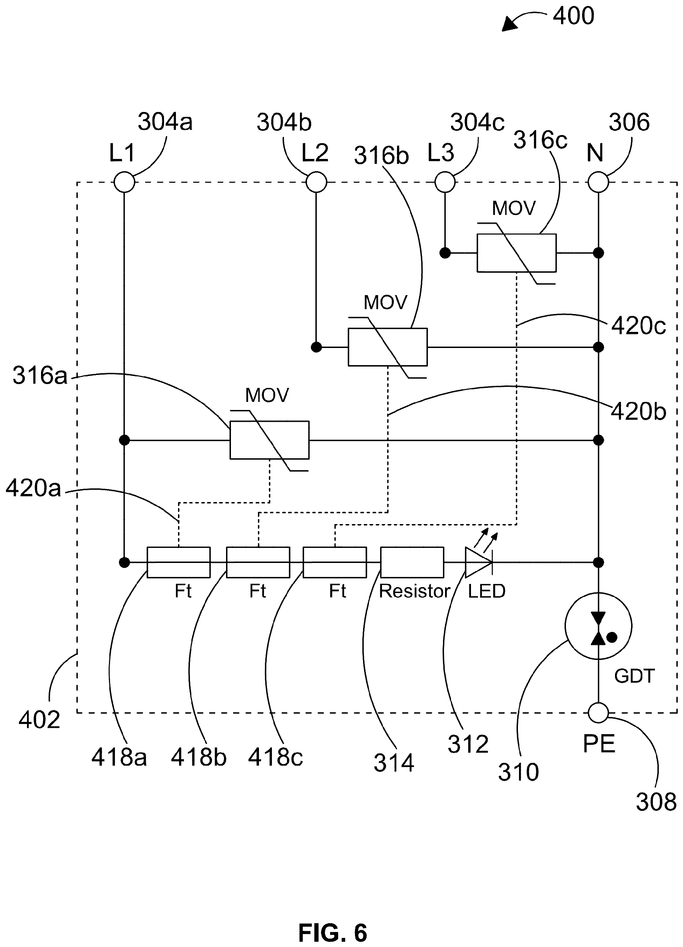

With reference to Figure 6, there is illustrated a circuit diagram 400 of surge protection circuitry 402 of a surge protection device according to a further embodiment of the invention. The circuitry 402 of Fig. 6 is similar to the circuitry 302 of Fig. 5. Like features of the circuitry 402 of Fig. 6 and the circuity 302 of Fig. 5 are labelled with like reference numerals and are not described in detail again.

In Fig. 6, three thermal fuses 418a, 418b, 418c are provided. Each thermal fuse 418a, 418b, 418c is thermally connected to a respective one of the three varistors 316, 316b, 316c, and indicated by dotted lines 420a, 420b, 420c. In this way, the indicator 312 is arranged in series with three thermal fuses 418a, 418b, 418c and will be deactivated, (i.e., the LED will be unilluminated) if any of the three thermal fuses 418a, 418b, 418c blows. In this way, an end-of-life condition of each varistor 316, 316b, 316c is monitored individually and an out of tolerance thermal performance of any of the varistors 316, 316b, 316c will cause the indicator 312 to communicate an inoperable status of the device to the user/operator.

By providing a thermal fuse 418a, 418b, 418c for each varistor 316, 316b, 316c, the thermal performance of each varistor is monitored separately. In this way, the user/operator is alerted as soon as any one varistor 316, 316b, 316c reaches end of life, rather than just when one monitored varistor (e.g., 316a of Fig. 5) reaches end of life. This allows the user/operator to have confidence that the device is operational when the indicator is activated (e.g., the LED 312 is illuminated). Providing three thermal fuses may mitigate a risk of an end of life condition of an unmonitored varistor going unobserved such that the device appears operational when it is not. One varistor of the group may have a reduced lifespan compared to the others if it experiences more surges than the others, due to manufacturing and quality control tolerances or defects, or due to differences in heat dissipation provision between varistors, e.g., due to differences in heatsinking.

The present invention is not limited to the specific examples or structures illustrated. Further embodiments within the scope of the present invention may be envisaged that have not been described above, for example, the surge protection device may be used to protect any suitable subject circuit, device or appliance. The surge protection device may comprise any suitable number of accommodating regions and protruding electrical terminals and may be fitted to any suitable number of wires. The body and lid may be secured around the wires of the subject circuit in any suitable manner. For example, the body and lid may be coupled by any suitable number and arrangement of fasteners. In another example, the body and lid may be connected by a hinged connection. In a further example, the body and lid may be coupled by an external coupling device, such as a cassette. The surge protection device may comprise a greater or lesser number of components than are illustrated in the figures. For example, the surge protection device may comprise any suitable number and type of spike portions. The surge protection device may be formed of any suitable materials and manufactured using any suitable methods.

To provide effective and inexpensive surge protection, an innovative device configured to be retrofit to existing circuits without disconnection or modification, and even while operating is required. The device of the present invention provides an innovative structure and electrical terminal arrangement to enable the device to be simply and inexpensively installed with minimal or no deleterious impact on the operation of the subject circuit.

Accordingly there has been herein described a surge protection device configured to be fitted to a plurality of electrical wires, the device comprising: a body comprising: surge protection circuitry configured to conduct a voltage to earth during a surge condition; and a plurality of accommodating regions, each accommodating region being configured to receive an electrical wire; wherein each accommodating region comprises a protruding electrical terminal arranged in electrical communication with the surge protection circuity; and a lid configured to extend over the plurality of accommodating regions; wherein the lid is configured to be coupled to the body to clamp any wires received in the accommodating regions against the protruding electrical terminals in the accommodating regions such that, for each accommodating region, a conductor of any wire received in the accommodating region is electrically connected to the surge protection circuitry by the respective protruding electrical terminal.

## Claims

1. A surge protection device configured to be fitted to a plurality of electrical wires, the device comprising:
a body comprising:
surge protection circuitry configured to conduct a voltage to earth during a surge condition; and
a plurality of accommodating regions, each accommodating region being configured to receive an electrical wire;
wherein each accommodating region comprises a protruding electrical terminal arranged in electrical communication with the surge protection circuity; and
a lid configured to extend over the plurality of accommodating regions;
wherein the lid is configured to be coupled to the body to clamp any wires received in the accommodating regions against the protruding electrical terminals in the accommodating regions such that, for each accommodating region, a conductor of any wire received in the accommodating region is electrically connected to the surge protection circuitry by the respective protruding electrical terminal.

2. The surge protection device of claim 1, wherein each protruding electrical terminal comprises a spike portion configured to pierce insulation of any wire received in the respective accommodating region.

3. The surge protection device of claim 1 or claim 2, wherein the device is configured to be retrofitted to a plurality of live electrical wires, preferably wherein the plurality of electrical wires comprises a live wire and a neutral wire of an alternating current mains supply, and/or preferably wherein each accommodating region comprises a plurality of protruding electrical terminals arranged in electrical communication with the surge protection circuity and/or preferably wherein each protruding electrical terminal is arranged to protrude into the respective accommodating region in a direction substantially parallel to a direction of a clamping force applied by the lid.

4. The surge protection device of any preceding claim, wherein the lid comprises a plurality of accommodating regions; and
wherein, when the lid is coupled to the body, each of the plurality of accommodating regions of the lid is substantially aligned with a respective one of the plurality of accommodating regions of the body, preferably wherein each accommodating region of the plurality of accommodating regions of the lid comprises a securing element configured to secure any wire received in the respective accommodating region.

5. The surge protection device of any preceding claim, wherein the lid is configured to be coupled to the body by a fastening element.

6. The surge protection device of claim 5, wherein the fastening element comprises fastener configured to couple the body to the lid at a point disposed between two adjacent accommodating regions of the plurality of accommodating regions of the body.

7. The surge protection device of claim 5 or claim 6, wherein the fastening element comprises a plurality of fasteners.

8. The surge protection device of claim 7, wherein the plurality of fasteners are configured to couple the body to the lid at points disposed proximate a periphery of the body.

9. The surge protection device of any preceding claim, wherein the surge protection circuitry comprises a conduction device configured to provide an open circuit in normal use and configured to conduct to earth during a surge condition.

10. The surge protection device of claim 9, wherein the conduction device is configured to conduct to earth when a voltage measured between a protective earth and any one the plurality of protruding electrical terminals exceeds a predetermined threshold.

11. The surge protection device of claim 9 or claim 10, wherein the conduction device is a gas discharge tube.

12. The surge protection device of any preceding claim, wherein the surge protection circuitry comprises an indicator configured to indicate that the surge protection device is operational.

13. The surge protection device of claim 12, wherein the surge protection circuitry comprises a thermal fuse arranged in series with the indicator and configured to interrupt a power supply to the indicator when a predetermined thermal threshold is exceeded.

14. The surge protection device of claim 13, wherein the thermal fuse is configured to be thermally connected to a component electrically connected between the protruding electrical terminal of a first accommodating region of the plurality of accommodating regions of the body and the protruding electrical terminal of a second accommodating region of the plurality of accommodating regions of the body.

15. The surge protection device of any preceding claim, wherein the surge protection circuitry comprises a varistor connected between the protruding electrical terminal of a first accommodating region of the plurality of accommodating regions of the body and the protruding electrical terminal of a second accommodating region of the plurality of accommodating regions of the body;
wherein, in response to a first voltage across the varistor, the varistor is configured to exhibit a first resistance, and in response to a second voltage across the varistor, the varistor is configured to exhibit a second resistance,
preferably wherein when the first voltage is higher than the second voltage, the first resistance is lower than the second resistance, and/or
preferably wherein the plurality of electrical wires comprises three live wires and a neutral wire of a three phase alternating current supply.
